Europäisches Patentamt

European Patent Office

Office européen des brevets

(19)

(11) Veröffentlichungsnummer: **0 212 184**
**A1**

## (12) EUROPÄISCHE PATENTANMELDUNG

(21) Anmeldenummer: **86109174.2**

(22) Anmeldetag: **04.07.86**

(51) Int. Cl.⁴: **A01D 43/10**

(30) Priorität: **07.08.85 DE 3528372**

(43) Veröffentlichungstag der Anmeldung:
**04.03.87 Patentblatt 87/10**

(84) Benannte Vertragsstaaten:
**AT BE CH DE FR GB IT LI NL**

(71) Anmelder: **Klöckner-Humboldt-Deutz AG
Zweigniederlassung Fahr**

**D-7702 Gottmadingen(DE)**

(72) Erfinder: **Meier, Hubert
Rielasingerstrasse 57
D-7702 Gottmadingen(DE)**
Erfinder: **Singer, Hans
Radolfzellerstrasse 26
D-7705 Steisslingen(DE)**

(54) **Vorrichtung zum Mähen und Aufbereiten von Halmgut.**

(57) Die Vorrichtung zum Mähen und Aufbereiten von Halmgut besteht aus einer Vielzahl nebeneinander angeordneter Mähkreisel (9,9'9") und einer direkt dahinter angeordneten um eine waagrechte Achse drehbare und sich im wesentlichen über die gesamte Breite der Mähkreisel erstreckenden Aufbereitungsanordnung, die aus einer Walze (13) mit einem links-und einem rechtsgängigen Schneckenteil (18,20) besteht, die in etwa der Mitte (21) der Walze zusammenstoßen oder sich überlappen, so daß das geschnittene Halmgut in einem einzigen - schmalen Schwad in der Mitte hinter der Walze zusammengeführt wird und aufgrund der Drehrichtung eine oberschlächtige Förderung des Halmgutes erzeugt, wobei entlang des Außenrandes der Schneckengänge Aufbereitungswerkzeuge (22,23) angeordnet sind.

Fig.2

EP 0 212 184 A1

## Vorrichtung zum Mähen und Aufbereiten von Halmgut

Die Erfindung betrifft eine Vorrichtung zum Mähen und Aufbereiten von Halmgut, bestehend aus einer Vielzahl nebeneinander angeordneter Mähkreisel und einer direkt dahinter angeordneten um eine waagrechte Achse drehbare und sich im wesentlichen über die gesamte Breite der Mähkreisel erstreckenden Aufbereitungsanordnung, deren Drehrichtung eine oberschlächtige Förderung des Halmgutes erzeugt.

Derartige Mähwerke werden oftmals mit einer Aufbereitungsvorrichtung versehen um das Halmgut nach dem eigentlichen Mähvorgang anzuschlagen und dadurch den Trocknungsprozeß zu beschleunigen. So ist z.B. aus der DE-AS 21 31 134 eine Konditionierungsmaschine für landwirtschaftliches Halmgut bekannt, die aus einer mit Förderwerkzeugen besetzten För_ dertrommel besteht, welche zusammen mit einer Leitwand einen Förderkanal bildet, dem seinerseits Schikanen zugeordnet sind um auf das geförderte Halmgut eine Konditionierungswirkung aufzuüben. Die Schikanen sind dabei stumpf ausgebildet, seitlich voneinander distanziert in zwischen den Förderwerkzeugen der Fördertrommel liegenden Räumen angeordnet und zwischen die Förderwerkzeuge einschwenkbar gelagert. Wird das Mähgut mit umlaufenden Schlagtrommeln, die mit Zinken oder Schlegeln besetzt sind, aufbereitet, bei denen das gemähte Halmgut über oder hinter dem Mähwerk aufgenommen und zur Aufbereitungsvorrichtung gefördert wird, so ist der größte Teil der Halme in ihrer Längsrichtung ausgerichtet, so daß diese nur mangelhaft von den Aufbereitungswerkzeugen erfaßt werden und oftmals unbearbeitet zwischen ihnen hindurchgleiten.

Ferner sind Aufbereitungsvorrichtungen bekannt, bei denen das Halmgut nach dem Mähvorgang durch Querförderteile auf eine geringere Breite zusammengeführt werden und dadurch einer relativ schmalen Konditioniereinrichtung z.B. einem Knick-oder Quetschwalzenpaar zugeführt werden. Hierbei liegen zwar die Halme beim Eintritt in den Spalt dieses Knickpaars unterschiedlich ausgerichtet in einem dicken vorgepreßten Strang, wobei die in der Mitte gelegenen Schichten jedoch nicht von den Aufbereitungswerkzeugen erfaßt werden, wodurch die Aufbereitungswirkung ungleichmäßig ist.

Aus der DE-AS 23 64 657 ist ein Mähaufbereiter bekannt, der aus einem freischneidenden Kreiselmähwerk und einer unmittelbar dahinter quer zur Gutsflußrichtung angeordneten sich annähernd über die gesamte Mähbreite erstreckenden Trommel besteht, an deren Mantel in Abständen nebeneinander senkrecht zur Trommelachse nach außen gerichtete starre oder federnde Zinken angebracht oder Schlegel angelenkt sind, wobei vorne über dem Mähbereich des Kreiselmähwerks ein die gesamte Mähbreite überdeckender die Halme nach vorne und nach unter drückender Niederhalter angeordnet ist. Der Niederhalter ist dabei als trommelförmiges Förderorgan mit an der Vorderseite nach unten gerichteter Drehung dargestellt und in Schneckenform ausgebildet.

Mit diesem bekannten Mähwerk wird also das Halmgut vor und während des Mähvorgangs, also während es noch an seinem wurzelnahen Ende festgehalten wird, durch die Schnecke seitlich quer zur Gutsflußrichtung umgelegt und nach dem Abschneiden in dieser Querlage der Aufbereitungsvorrichtung zugeführt, die von herkömmlicher Art ist. Ein derartiger Aufbau ist jedoch umständlich, kompliziert und teuer.

Aufgabe der vorliegenden Erfindung ist es, eine Vorrichtung zum Mähen und Aufbereiten von Halmgut zu schaffen, die einfacher und billiger im Aufbau ist und mit der das Halmgut noch intensiver aufbereitet werden kann.

Ausgehend von einer Vorrichtung der eingangs näher genannten Art wird zur Lösung dieser Aufgabe vorgeschlagen, daß die Aufbereitungsanordnung aus einer Walze mit einem links und einem rechtsgängigen Schneckenteil besteht, die in etwa der Mitte der Walze zusammenstoßen oder sich überlappen, so daß das geschnittene Halmgut in einem einzigen schmalen Schwad in der Mitte hinter der Walze zusammengeführt wird und daß entlang des oberen Randes der Schneckengänge Aufbereitungswerkzeuge angeordnet sind.

Es wird vorgeschlagen, daß die Schneckenteile eine Steigung aufweisen, die gleich oder größer ist als der Hüllkreis durchmesser der Aufbereitungsanordnung um eine wirksame Schwadformung zu erhalten.

Vorteilhafterweise wird die Walze derart bezüglich der Mähkreisel angeordnet, daß die an ihren Vorderrand gelegte Tangente in etwa durch die Drehachsen der Mähkreisel verläuft.

Zur guten Aufnahme des geschnittenen Halmgut es wird die Aufbereitungsanordnung mit den Werkzeugen derart angebracht, daß der Abstand zwischen der unteren Begrenzung des Hüllkreises der Werkzeuge zu den Mähkreiseln zwischen 15 und 100 mm beträgt.

Die Walze selbst kann in Taschenlagern mit Keilbefestigung lösbar an der Vorrichtung gelagert sein und die Aufbereitungswerkzeuge können etwa aus feststehenden segmentförmigen Zinken bestehen oder aus elastischen in Abstand zueinander angeordneten Borsten bestehen oder aber aus beweglichen gelagerten Schlagwerkzeugen bestehen z.B. aus gelenkig gelagerten keilförmigen Schlegeln.

Bei einem anderen bevorzugten Ausführungsbeispiel weist die Walze zwei mehrgängige gegenläufige Schneckenteile auf oder aber auch Schneckenteile, die mit Werkzeugunterbrechungen in Umfangsrichtung versehen sind, wobei der werkzeuglose Sektor des einen Schneckenteils sich mit dem mit Werkzeugen versehenen Sektor des anderen Schneckenteiles an diesen Stellen überlappt.Dadurch soll insbesondere die Querförderung des Halmgutes intensiviert werden.

Vorteilhafterweise ist die Walze von einer Leithaube überdeckt, an deren Unterseite Führungsleisten angeordnet sind, die mit den Aufbereitungswerkzeugen zusammenwirken. Der hintere Teil der Leithaube kann dabei aufklappbar sein.

Zur Intensiveren Bearbeitung des Halmgutes wird vorgeschlagen, eine querverlaufende, verstellbare Anschlagkante, die mit den Werkzeugen zusammenwirkt, anzubringen. Eine bessere Schwadlage erhält man, wenn die Leithaube im Bereich hinter der Aufbereitungsanordnung mit seitlich nach unten und nach hinten konvergierend angeordneten Leitblechen versehen ist.

Einen besonders einfachen Antrieb erhält man, wenn die Walze über ein Ansatzwinkelgetriebe antreibbar ist, das am Hauptwinkelgetriebe angeflanscht ist. Zwischen der Ausgangswelle des Ansatzwinkelgetriebes und der verlängerten Welle der Walze kann zur besseren Anpassung an unterschiedliche Mähbedingungen ein Hülltrieb mit austauschbaren Scheiben oder ein Variator angeordnet sein.

Die erfindungsgemäße Vorrichtung weist den Vorteil einer besonders intensiv arbeitenden Aufbereitungsanordnung auf. Die am äußeren Rand der Schneckengänge vorgesehenen Aufbereitungswerkzeuge weisen einen relativ geringen radialen Abstand vom Schneckenrad auf und sind derart angeordnet, daß der Vorteil einer glatten Oberfläche auf der Vorderseite des Schneckenganges erhalten wird. Da die Aufbereitungswerkzeuge der Schneckengangschräge angepaßt sind, erhält man eine größere Relativbewegung zwischen dem gemähten Halmgut und den Werkzeugen bzw. dem Schneckengang, so daß das Halmgut intensiver bearbeitet und gleichzeitig in axialer Richtung gefördert wird.

Diese axiale Förderung dient dazu, das Halmgut auf einer relativ kurzen Strecke in Fahrtrichtung gesehen zu einem schmalen Schwad zusammenzuführen.

Dadurch, daß der hintere Teil der Leithaube abklappbar ist, kann beim Frontanbau ein ungehindertes Einfahren des Dreipunktschnellkuppelrahmens des Traktors erreicht werden. Der vordere Teil der Mähwerksschutzabdeckung kann aufklappbar sein um so eine kürzere Fahrzeuglänge zu erreichen.

Aufgrund der Anordnung der Walze bezüglich der Mähkreisel wird eine gute Abnahme des gemähten Halmgutes von den Trenntrommeln gewährleistet.

Durch die Anordnung der Walze in Taschenlagern mit Keilbefestigung wird der Vorteil erzielt, daß damit ein schnelles Auswechseln verschiedener Walzenformen ermöglicht wird; soll das Halmgut nicht aufbereitet werden z.B. beim täglichen Grünfutterholen mit Ladewagen, so kann eine Walze mit glatter Schnecke eingesetzt werden, welche dann einen schmalen Schwad bildet, der mit Abstand zu den Traktorrädern zwischen diesen abgelegt wird.

Die erfindungsgemäße Aufbereitungsanordnung in Form einer Walze mit Schneckenform bringt bei kleinerem Durchmesser bzw. kleinerer Geschwindigkeit den Vorteil einer erhöhten Aufbereitungswirkung mit sich. Sie eignet sich daher insbesondere für Frontmähwerke mit beengten Einbauraum, wobei sie durch ihr geringeres Gewicht auch in normalen Mähwerken vorteilhaft einzusetzen ist.

Im folgenden wird die Erfindung anhand der Zeichnung näher erläutert, in der ein vorteilhaftes Ausführungsbeispiel dargestellt ist. Es zeigen:

Figur 1 schematisch eine Seitenansicht der erfindungsgemäßen Mäh-und Aufbereitungsvorrichtung;

Figur 2 einen Schnitt entlang der Linie B-B von Figur 1;

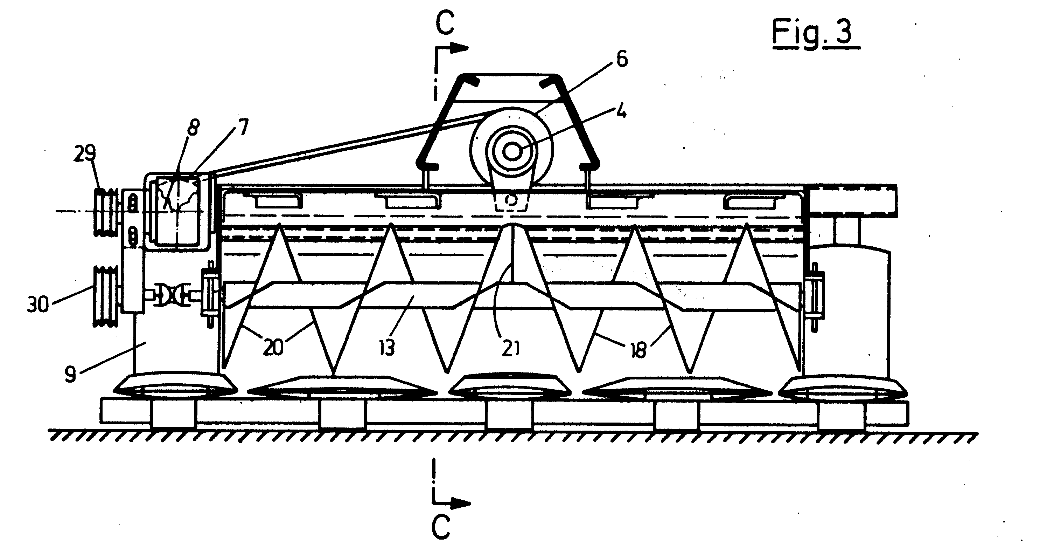

Figure 3 einen Schnitt entlang der Linie A-A von Figur 1;

Figur 4 einen Schnitt entlang der Linie C-C von Figur 3;

Figuren

5 bis 7 verschiedene Aufbereitungswerkzeuge und

Figur 8 eine Vorderansicht einer anderen Aufbereitungsanordnung.

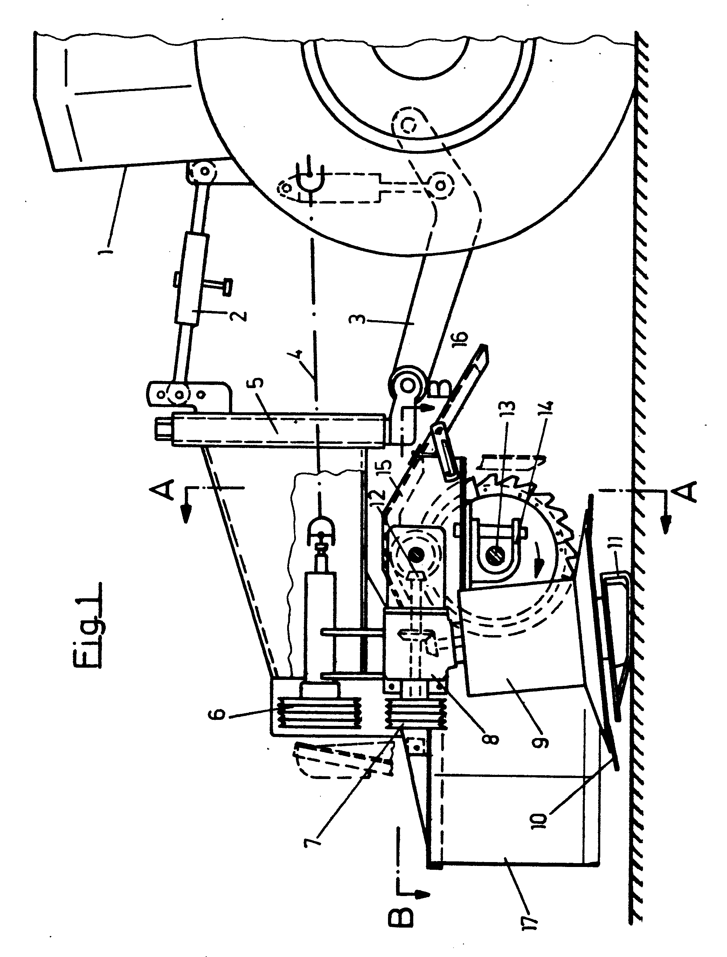

In Figur 1 ist mit 1 schematisch das Vorderteil eines Traktors bezeichnet, an dessen Dreipunktschnellkuppelrahmen 2, 3 die erfindungsgemäße Mäh-und Aufbereitungsvorrichtung z.B. über einen Kupplungsrahmen 5 angelenkt wird. Die Mähanordnung weist in herkömmlicher Weise eine Vielzahl nebeneinander angeordneter Mähkreisel 9, 9', 9" auf, an deren unteren Ende rotierende Schneidwerkzeuge 10 vorgesehen sind und die sich über einen Gleitschuh 11 auf den Boden abstützen. Die Mähanordnung ist durch eine Schutzvorrichtung 17 allseitig geschützt und über ein Hauptwinkelgetriebe 8 über eine Kardanwelle 4 vom Traktor antreibbar. Wie Figur 1 erkennen läßt, treibt die Kardanwelle 4 eine erste Riemenscheibe 6 an, die über einen Treibriemensatz mit einer zweiten Riemenscheibe 7 verbunden ist, welche das Hauptwinkelgetriebe 8 derart antreibt,daß die einzelnen Mähkreisel 9 in Drehung versetzt werden. Am Hauptwinkelgetriebe 8 ist ein Ansatzwinkelgetriebe 12 angeflanscht.

Unmittelbar hinter den Mähkreiseln 9, 9' ist eine um eine waagrechte Achse drehbare und sich im wesentlichen über die gesamte Breite der Mähkreisel 9, 9'... erstreckende Aufbereitungsanordnung vorgesehen, die aus einer Walze 13 besteht, auf der ein links-und ein rechtsgängiges Schneckenteil 18, 20 angeordnet sind. Die Walze 13 wird durch eine Leithaube 15 abgedeckt, deren hinteres Ende 16 abklappbar ist um so die Ankupplung der Mäh-und Aufbereitungsvorrichtung an den Schlepper zu erleichtern.

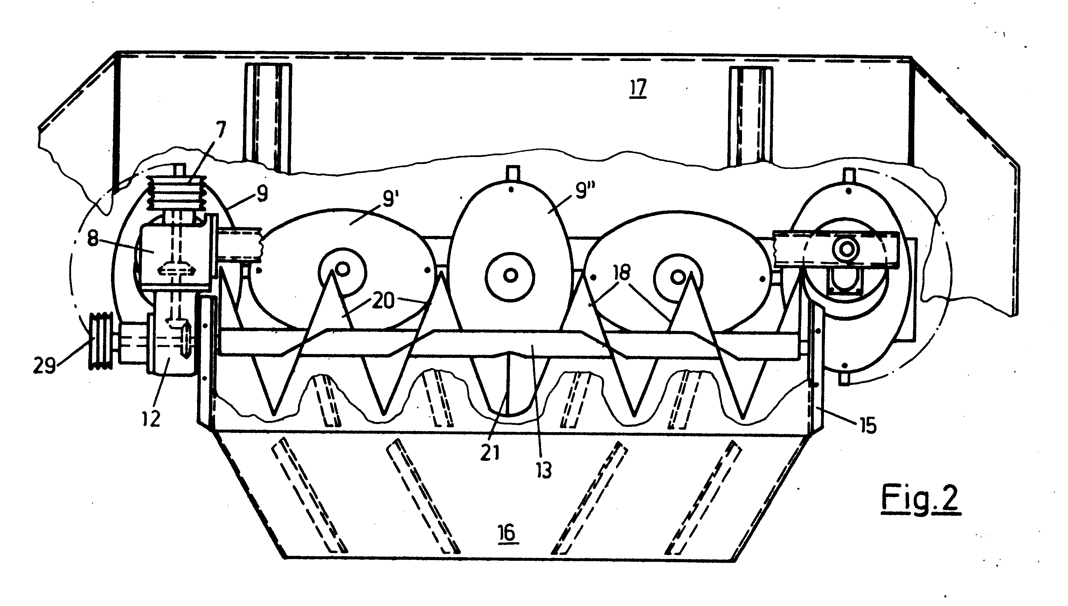

Wie insbesondere Figur 2 erkennen läßt, sind die beiden Schneckenteile 18, 20 derart auf der Walze 13 angeordnet, daß die Schneckengänge in etwa der Mitte. 21 der Walze 13 zusammenstoßen oder sich an dieser Stelle überlappen. Der Antrieb der Walze 13 erfolgt über das Ansatzwinkelgetriebe 12, welches am Hauptwinkelgetriebe 8 angeflanscht ist, wobei zwischen der Ausgangswelle des Ansatzwinkelgetriebes und der verlängerten Antriebswelle der Walze 13 ein Hülltrieb 29 mit unterschiedlich großen austauschbaren Scheiben angeordnet ist, wodurch die Umdrehungsgeschwindigkeit der Walze 13 verändert werden kann.

Die Welle 13 ist bezüglich der Mähkreisel 9, 9', 9" derart angeordnet, daß die Tangente an dem vorderen Rand der Schneckengänge in etwa durch die Drehachse der einzelnen Mähkreisel verläuft.

Figur 1 zeigt ferner, daß die Walze 13 an ihren beiden Enden in Taschenlagern 14 mit Keilbefestigung gelagert sein kann, wodurch ein schnelles Auswechseln ermöglicht wird und der Einsatz verschiedener Walzen mit unterschiedlichen Schneckengängen ermöglicht wird.

Erfindungsgemäß ist der äußere Rand der Schneckengänge in beiden Schneckenteilen 18, 20 mit Aufbereitungswerkzeugen versehen, die unterschiedliche Formen aufweisen können und aus unterschiedlichen Materialien bestehen können.

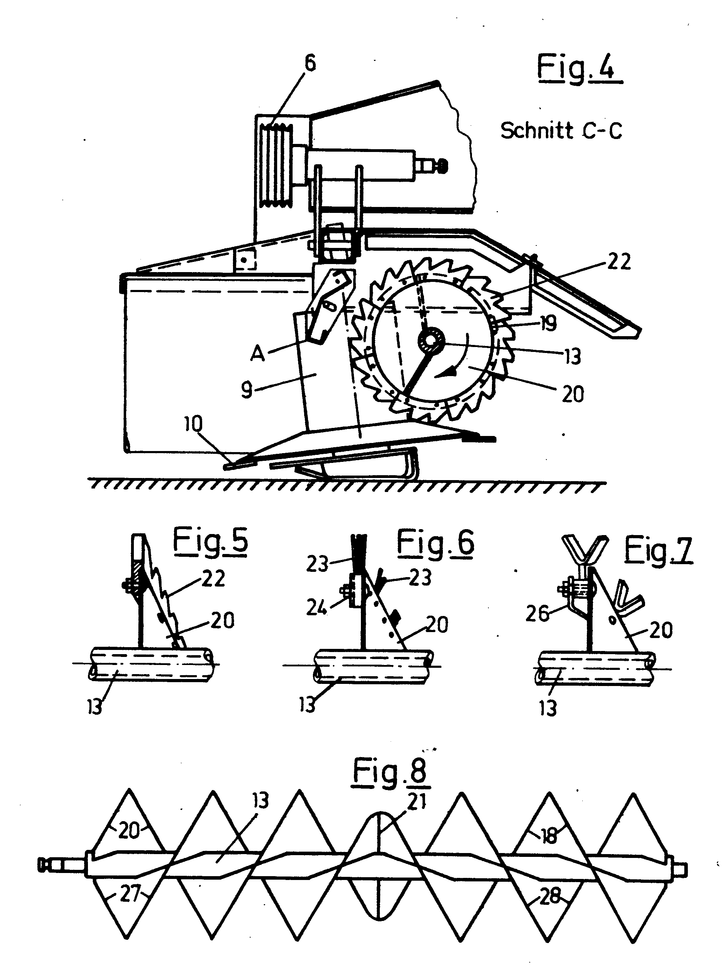

Figur 4 zeigt eine Seitenansicht der Walze 13 mit einer vollständigen Umdrehung des Schneckenteils 20, wobei hier der äußere Umfang 19 des Schneckenteils 20 mit sägezahnförmigen Aufbereitungswerkzeugen 22 besetzt ist. Wie Figur 5 erkennen läßt, können die Aufbereitungswerkzeuge 22 an den Umfang 19 des Schneckenteils 20 angeschraubt sein und damit feststehen.

Die querverlaufende und verstellbare Anschlagkante A wirkt mit den Aufbereitungswerkzeugen zusammen und trägt zur Konditionierung des Halmgutes bei.

Wie Figur 6 erkennen läßt, können aber auch im Abstand voneinander angeordnete ein-oder mehrteilige Borsten 23 mittels einer Befestigungsvorrichtung 24 elastisch am Schneckenteil 20 befestigt sein.

Wie Figur 7 erkennen läßt, ist es auch möglich, mit gelenkigen d.h. beweglichen Aufbereitungswerkzeugen 25 z.B. in Form von gebogenen Schlegeln, das Schneckenteil 20 zu besetzen und zwar über eine geeignete die Beweglichkeit zulassende Haltevorrichtung 26.

Figur 8 zeigt eine weiteres Ausführungsbeispiel einer geeigneten Walze mit mehrteiligen Schneckengängen 20, 27 bzw. 18, 28, die ebenfalls gegenläufig angeordnet sind und in etwa der Mitte der Walze 13 an der Stelle 21 zusammentreffen oder sich an dieser Stelle überlappen.

Unterhalb der Leithaube 15 können auch noch Führungsleisten vorgesehen sein, die mit der Aufbereitungsanordnung 13, 18, 20 zusammenwirken um so eine noch bessere Schwadbildung bzw. Aufbereitung des zu erntenden Halmgutes zu gewährleisten.

Mit der erfindungsgemäßen Vorrichtung zum Mähen und Aufbereiten von Halmgut wird ein besonders einfacher Aufbau mit einer besonders guten Wirkungsweise kombiniert, wodurch Erntemaschinen kleineren Durchmessers bzw. kleinerer Antriebsgeschwindigkeit und besonders hoher Aufbereitungswirkung verwendet werden können.

**Ansprüche**

1. Vorrichtung zum Mähen und Aufbereiten von Halmgut, bestehend aus einer Vielzahl nebeneinander angeordneter Mähkreisel und einer direkt dahinter angeordneten um eine waagrechte Achse drehbaren und sich im wesentlichen über die gesamte Breite der Mähkreisel erstreckenden Aufbereitungsanordnung, deren Drehrichtung eine oberschlächtige Förderung des Halmgutes erzeugt, dadurch gekennzeichnet, daß die Aufbereitungsanordnung aus einer Walze (13) mit einem links-und einem rechtsgängigen Schneckenteil (18, 20) besteht, die in etwa der Mitte (21) der Walze zusammenstoßen oder sich überlappen, so daß das geschnittene Halmgut in einem einzigen schmalen Schwad in der Mitte hinter der Walze zusammengeführt wird und daß entlang des Außenrandes - (19) der Schneckengänge Aufbereitungswerkzeuges (22, 23, 25) angeordnet sind.

2. Vorrichtung nach Anspruch 1, dadurch gekennzeichnet, daß die Schneckenteile (18,20) eine Steigung aufweisen, die gleich oder größer ist als der Hüllkreisdurchmesser der Aufbereitungsanordnung.

3. Vorrichtung nach Anspruch 1, dadurch gekennzeichnet, daß die Walze (13) derart bezüglich der Mähkreisel angeordnet ist, daß die an den Vorderrand der Schneckenteile gelegte Tangente in etwa durch die Drehachsen der Mähkreisel verläuft.

4. Vorrichtung nach Anspruch 1, dadurch gekennzeichnet, daß der Hüllkreis der Aufbereitungswerkzeuge in seinem unteren Bereich vorzugsweise einen Abstand zwischen 15 und 100 mm zu den Mähkreiseln aufweist.

5. Vorrichtung nach Anspruch 1, dadurch gekennzeichnet, daß die Walze (13) in Taschenlagern (14) mit Keilbefestigung lösbar an der Mähvorrichtung gelagert ist.

6. Vorrichtung nach Anspruch 1, dadurch gekennzeichnet, daß die Aufbereitungswerkzeuge aus feststehenden segmentförmigen Zinken (22) bestehen.

7. Vorrichtung nach Anspruch 1, dadurch gekennzeichnet, daß die Aufbereitungswerkzeuge aus elastischen im Ab stand zueinander angeordneten Borsten (23) bestehen.

8. Vorrichtung nach Anspruch 1, dadurch gekennzeichnet, daß die Aufbereitungswerkzeuge aus beweglich gelagerten Schlagwerkzeugen bestehen.

9. Vorrichtung nach Anspruch 8, dadurch gekennzeichnet, daß die beweglich gelagerten Schlagwerkzeuge gelenkig gelagerte keilförmige Schlegel (25) sind.

10. Vorrichtung nach Anspruch 1, dadurch gekennzeichnet, daß die Walze (2) mehrgängige gegenteilige Schneckenteile (20, 27; 18, 28) aufweist.

11. Vorrichtung nach Anspruch 1, dadurch gekennzeichnet, daß die beiden Schneckenteile Unterbrechungen in der Werkzeuganbringung auf Teilsegmenten in Umfangsrichtung aufweisen, wobei sich, in Längsrichtung der Schneckenwelle gesehen, jeweils ein werkzeugloser Sektor des einen Schneckenteils mit einem mit Werkzeugen versehenen Sektor des anderen Schneckenteils überlappen.

12. Vorrichtung nach Ansprüchen 1 bis 11, dadurch gekennzeichnet, daß die Walze von einer Leithaube überdeckt ist, an deren Unterseite Führungsleisten angeordnet sind, die mit den Aufbereitungswerkzeugen zusammenwir ken.

13. Vorrichtung nach Anspruch 12, dadurch gekennzeichnet, daß im vorderen Teil der Leithaube eine querverlaufende, verstellbare Anschlagkante (A) angebracht ist, die mit den Aufbereitungswerkzeugen zusammenwirkt.

14.Vorrichtung nach Anspruch 12, dadurch gekennzeichnet, daß der hinterste Teil der Leithaube aufklappbar ist.

15. Vorrichtung nach einem der Ansprüche 1 bis 14, dadurch gekennzeichnet, daß die Leithaube im Bereich hinter der Aufbereitungsanordnung mit seitlich nach unten und nach hinten konvergierend angeordneten Leitblechen versehen ist.

16.Vorrichtung nach einem der vorhergehenden Ansprüche, dadurch gekennzeichnet, daß die Walze (13) über ein Ansatzwinkelgetriebe antreibbar ist, das am Hauptwinkelgetriebe angeflanscht ist.

17.Vorrichtung nach Anspruch 16, dadurch gekennzeichnet, daß zwischen der Ausgangswelle des Ansatzwinkelgetriebes und der verlängerten Welle der Walze (13) ein Hülltrieb (29) mit austauschbaren Scheiben oder einem Variator angeordnet ist.

Fig.1

0 212 184

Fig.2

0 212 184

Fig. 3

Fig.4

Schnitt C-C

Fig.5

Fig.6

Fig.7

Fig.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | FR-A-2 107 042 (BUCHER-GUYER) * Insgesamt * & DE-A-2 131 134 (Kat. D) | 1,6 | A 01 D 43/10 |
| A | | 13 | |
| | --- | | |
| Y | FR-A-2 557 420 (LUNDAHL) * Seite 2, Zeilen 11-37; Seite 7, Zeile 16 - Seite 8, Zeile 6; Seite 12, Zeile 1 - Seite 13, Zeile 2; Seite 15, Zeilen 10-16 * | 1,6 | |
| | --- | | |
| A | EP-A-0 028 045 (MULTINORM) * Ansprüche * | 3,4 | |
| | --- | | |
| A | WO-A-8 102 966 (MASSEY-FERGUSON) * Anspruch 1 * | 5 | RECHERCHIERTE SACHGEBIETE (Int. Cl.4) |
| | --- | | A 01 D |
| A | EP-A-0 154 128 (NATIONAL RESEARCH DEVELOPMENT CORP.) * Seite 59, Zeilen 4-12; Seite 66, Zeilen 12-14; Figur 30A * | 7,12, 15 | |
| | --- | | |
| D,A | DE-B-2 364 657 (WELGER) * Insgesamt * | 8,9,13 | |
| | --- -/- | | |

Der vorliegende Recherchenbericht wurde für alle Patentansprüche erstellt

| Recherchenort | Abschlußdatum der Recherche | Prüfer |
|---|---|---|
| DEN HAAG | 15-10-1986 | DE LAMEILLIEURE D. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 268 689 (SPERRY RAND)<br>* Seite 2, linke Spalte, Abschnitt 5 * | 10 | |
| A | FR-A-2 178 082 (BUCHER-GUYER)<br>* Seite 2, Zeilen 27-29 * | 14 | |
| A | EP-A-0 116 662 (KLÖCKNER-HUMBOLDT-DEUTZ)<br>* Seiten 14,15; Figur 3 * | 16,17 | |
| A | DE-A-1 930 905 (STEMMER) | | |
| A | FR-A-1 120 427 (CLAAS) | | |
| A | US-A-3 233 395 (DAHL) | | RECHERCHIERTE SACHGEBIETE (Int. Cl.4) |
| A | WO-A-8 200 564 (NATIONAL RESEARCH DEVELOPMENT CORP.) | | |

Der vorliegende Recherchenbericht wurde für alle Patentansprüche erstellt.

| Recherchenort | Abschlußdatum der Recherche | Prüfer |
|---|---|---|
| DEN HAAG | 15-10-1986 | DE LAMEILLIEURE D. |